# EUROPEAN PATENT APPLICATION

(11) **EP 1 707 254 A1**
(43) Date of publication of application: **04.10.2006**
(21) Application number: 06006377.3
(22) Date of filing: 28.03.2006
(51) Int. Cl.: B01D 63/10, C25D 13/24

(54) **High density filtration module**

(30) Priority: 30.03.2005 US 666914 P
(71) Applicant: SPECIAL MEMBRANE TECHNOLOGIES, INC., Oceanside, CA 92056 (US)
(72) Inventor: McCague, Michael K., Escondido, CA 92026 (US); Light, William G., San Diego, CA 92103 (US)
(74) Representative: HOFFMANN EITLE

(57) **Abstract**

A high-density filtration module (11) for separating a liquid from a high viscosity and/or high solids feed comprising sheets of porous filtration membrane (17) being disposed generally concentrically about a central porous tube (15). The membranes are separated by a sheet of feed liquid spacer material (21) having two sets of generally parallel ribs (37) of similar size regularly spaced apart from one another which project from opposite surfaces of a thin central layer (33). Permeate carrier layers (19) are disposed adjacent discharge surfaces of the sheet membranes. The sets of ribs are arranged so that each rib is located substantially equidistant from the two adjacent ribs in the opposite set, and the central layer is about 40% or less as thick as the base of a rib where it joins the central layer.

## Description

This application claims priority from U.S. Patent Application Serial No. 60/666,914 filed March 30, 2005.

This invention generally relates to filtration modules which have high filter or membrane packing density and to methods for recovering resources and/or water from high viscosity and/or high-solids waste, such as that from an electrocoat painting operation, through the use of such modules or cartridges.

### Background of the Invention

Modules or cartridges containing various types of sheet membranes and filters are commercially available in a variety of configurations which find particular use in different separation applications and modes of filtration. The two basic modes of pressure-driven filtration are direct filtration and cross-flow filtration. In direct filtration, the fluid being filtered flows perpendicular to and through the filter surface. Materials being removed from the fluid accumulate on the filter surface, and the filter is either cleaned or replaced when such accumulated materials result in inefficient operation of the filter.

The second mode of pressure filtration, i.e. cross-flow filtration, is the field of the present invention. In this mode, the fluid to be filtered flows tangential to the filter surface, becoming more concentrated as filtrate passes through the filter or membrane. A major advantage of this mode is that filtered materials do not all accumulate on the filter surface. This "self-cleaning" benefit allows cross-flow filters to operate essentially continuously for extended periods without the need for frequent cleaning or replacement. Cross-flow filtration modules have taken several different configurations, i.e., tubular, plate-and-frame and spiral-wound, with spiral-wound being a common example of a high packing density module.

Capital and energy costs for such a system are mainly determined by the system size and the pressure required for effective system operation, which in turn are inversely proportional to the membrane or filter module throughput, often referred to as permeate flux, filtrate rate, or mass transfer coefficient (MTC).
1. Permeate flux is a measure of the inherent throughput for a membrane or filter, and it is often expressed in terms of liters of filtrate produced per square meter of filter or membrane per hour (Lmh). With every other factor being equal, the higher the permeate flux, the smaller the system and the lower the pressure required, resulting in lower capital and energy costs.
2. Filtrate rate per module (F), conveniently measured in terms of gallons per minute or gal/min, directly determines the number of modules required for a system to deliver a specified flow rate, and thus the overall size of a system. The filtrate rate can be calculated as the product of the permeate flux and the amount of filter or membrane area (A) in a module (often referred to as the "module packing density"). The higher the flux and the higher the packing density, the higher the filtrate rate. Of the module configurations discussed above, the highest module packing density is achieved by the spiral-wound design, and for this reason, the spiral-wound configuration is often the design of choice for filtering a fluid to produce a given, stable permeate flux.
3. The MTC is the most useful measure when interested in minimizing energy costs as it is expressed in terms of permeate (filtrate) flux per unit driving force, which is pressure. All other factors being equal, the higher the MTC, the lower the pressure and thus the lower the energy costs. Convenient units for MTC are liters of permeate per square meter of filter or membrane area per hour per bar pressure, or Lmh/bar.

Often the choice of module configuration to achieve optimal high, stable throughput is determined by the characteristics of the fluid to be filtered, such as its suspended solids concentration and viscosity. Moreover, the fluid characteristics can be key factors in selecting a preferred module design and will influence the dimensions and the hydrodynamics of the passageways through which the feedstock is being caused to flow (the so-called "feed channels"). While the common spiral-wound design generally has the highest membrane or filter packing density, this "high density" is usually achieved with the use of a thin feed channel spacer, and the character of sheet separator that is traditionally used to provide the feed channels has inherently partly obstructed the feed channels. This feature has often made the spiral-wound design unsuitable for filtering liquids having a high suspended solids concentration and/or high viscosity, due to excessive feed channel plugging, fouling, and excessive feed channel pressure drop (ΔP).

By high density membrane packing is meant at least about 100 ft² of membrane surface area per ft³ of module volume.

By high viscosity feed liquids is meant a viscosity of at least about 15 cp (25°C).

By high suspended solids is meant, a concentration of at least about 5 g/L.

Various attempts have been made to overcome this difficulty of minimizing the resistance inherent in the feed channel spacer material. For example, U.S. Patent No. 4,902,417 discloses the use of the sheet material in the form of a plurality of the parallel ribs which are interconnected in a general square type grid with parallel cross filaments, which as seen in Figure 6 would lie adjacent of one surface of the array of ribs. The ribs would be aligned in the axial direction through the spiral wound cross-filled element. In earlier efforts illustrated in U.S. Patent No. 4,500,426, what is termed wave-shaped spacer material was used to provide a multiplicity of parallel channels for fluid flow adjacent sheetlike semipermeable membrane, which material could be used in various of the aforementioned configurations, tubular, plate-and-frame and spiral wound modules. Earlier in the 1980's, a spiral wound reverse osmosis membrane assembly was illustrated in European patent application 045663, which showed the employment of a spacer element 34 having a thick center strip with oppositely disposed ribs, where the thickness of the center strip is just over 50% of the height of the ribs projecting from both surfaces thereof.

U.S. Patent No. 4,225,438 to Miller, et al. teaches an imperforate ribbed support for use in a blood dialyzer where blood is being pumped through a spiral membrane envelope while a dialyzing solution is being caused to flow axially through the dialyzer between the adjacent coils of the blood carrying membrane envelope; a similar hemodialysis unit is shown in U.S. Patent No. 3,687,293.

None of these proposals has resulted in a satisfactory solution to providing a high density (as hereinbefore defined) modules that were truly acceptable for use in many applications, and accordingly the search has continued for still better solutions to these problems.

### Summary of the Invention

One application where previous attempts to provide thoroughly acceptable "high density" filtration modules were unsuccessful is the treatment of wastewater from electrocoat painting operations and to recover pigments for reuse and to recycle the water. This has been particularly true for low volatile, organic carbon (VOC) paints, which are prone to pigment agglomeration, resulting in the generation of suspended solids at high concentrations, whereas such pigments would generally stay in suspension with the high VOC paints that were earlier widely used. However, it has now been found that the employment of high density modules which employ feed spacer sheet material in the form of a thin center sheet that supports two arrays of parallel ribs on opposite surfaces thereof, with the arrays being staggered so that each of the ribs is spaced an equal distance from the two adjacent ribs on the opposite surface of the spacer sheet, solves this problem with such paints. Moreover, the cross sectional shape of the ribs is carefully controlled to provide adequate support while minimizing spatial requirements.

In one particular aspect, the invention provides a cylindrical high-density filtration module for separating a liquid from a feed of high viscosity or containing high suspended solids, which module comprises porous sheetlike filtration membrane having pores sized to allow passage of the liquid in a transverse direction while rejecting passage therethrough of solids, sheets of said membrane being disposed generally concentrically about a central axis, a sheet of feed liquid spacer material having two sets of generally parallel ribs of similar size regularly spaced apart from one another, said sets of ribs projecting from opposite surfaces of a thin central layer and forming feed-carrying channels extending in a generally axial direction with respect to the cylindrical module, said sets of ribs being arranged so that each rib is located substantially equidistant from the two adjacent ribs in the opposite set, said central layer having a thickness "t" of about 40% or less than the thickness "e" of said ribs at their bases where said ribs join said central layer, said feed carrier spacer sheet being disposed adjacent an entry surface of said filtration membrane; and a permeate carrier layer disposed adjacent a discharge surface of each said membrane sheet.

In another particular aspect, the invention provides a method for economically recovering pigment from electrocoat painting wastewater feed, which method comprises the steps of: (a) feeding said wastewater axially through a high-density membrane module, which module comprises a plurality of sheets of porous membrane having pores sized to allow passage of liquid in a transverse direction while rejecting passage therethrough of solid pigments and the like in said feed, said sheets of membranes being arranged in essentially coaxial cylinders about a central axis, flexible feed spacer sheet material disposed adjacent the active entry surface of said membrane sheet, said spacer material comprising a thin central layer and two sets of individual ribs, each set projecting from an opposite surface of said central layer and each including a plurality of parallel ribs of similar size regularly spaced apart from one another with tips of said ribs contacting said membrane sheets so as to maintain spacing therebetween to form uniform feed-carrying channels, the regions between said parallel ribs being completely open and oriented so that said channels extend in a generally axial direction of flow, said ribs providing between 2 and about 10 channels per inch and being generally triangular in cross-section with said tips being smoothly rounded, said central layer having a thickness "t" about 40% or less than the thickness "e" of said ribs at their bases, and a permeate carrier layer disposed adjacent a discharge surface of each said membrane sheet, said permeate carrier conducting the discharge flow of water from said module, and (b) withdrawing liquid from said module for extended periods of time at a permeate flux of at least about 10 Lmh, at an inlet pressure of 100 psig or less, when being used to reclaim pigment from electrocoat painting wastewater.

### Brief Description of the Drawings

FIGURE 1 is a perspective view which schematically illustrates the winding of various leaves about a central tube to construct a spiral-wound filtration module which exemplifies one common type of "high density" module.
FIGURE 2 is a cross sectional end view of a wound module of the type shown in FIGURE 1, taken perpendicular to its axis.
FIGURE 3 is an enlarged fragmentary view of the spiral-wound module of FIGURE 2 which illustrates the details of flow channels in a high membrane packing density module containing a spacer sheet embodying various features of this invention.
FIGURE 4 is an enlarged view of a fragment of a flexible ribbed spacer sheet which is employed in the module of FIGURE 2.
FIGURE 5 is a further enlarged view of the FIGURE 4 sheet to show specific details of the dimensional characteristics of the design.

### Detailed Description of the Preferred Embodiments

High-density cross-flow elements or modules are cylindrical devices that contain a plurality of essentially concentric tubes of filtration membrane; they have commonly contained sheets of membranes wrapped, i.e. spirally wound, around a central tube, referred to as a permeate tube. The traditional spiral winding allows high membrane or filter packing density; when viewed in cross section, it is in essence an onion-skin arrangement where there are essentially a multiplicity of concentric (more correctly coaxial) layers of membrane, permeate carrier, membrane, feed spacer, membrane, permeate carrier, membrane, etc. Although spiral winding is the most common way of achieving such a cross flow high density filtration element or module, it should be understood that other methods of fabrication can achieve the same desired end of such a plurality of concentric (in cross-section) layers, and such arrangements are accordingly contemplated for use of the improved spacer material. Fluid to be filtered flows into one axial end of such a cross flow device, axially through the device in feed channels, and exits from the other end of the device. The curvatures of the feed channels conform to the diameter of the central permeate tube in its smallest dimension and to the outside diameter of the module in its largest dimension. To maintain the integrity of such curved feed channels, the improved feed channel spacer sheet material not only defines the channels in the direction of fluid flow, but also supports and spaces the membranes perpendicular to fluid flow and particularly during fabrication of the modules. Heretofore, traditional spiral modules have experienced a high inherent pressure drop occurring in the feed channels of spiral-wound elements which severely limited flow velocity, which parameter is generally measured and stated in terms of the fluid volumetric flow rate (Q). As a result, the processing of liquids with high concentrations of suspended solids or other materials often tended to "foul" the membranes or filters. The design of the improved feed spacer sheet material allows liquid velocities to be achieved which parallel those of tubular modules, i.e. at least about 10 Lmh and preferably at least about 20 Lmh and even higher; this is of paramount importance for many applications. Likewise important is the ability to achieve such filtration performance continuously for periods measured in weeks, and preferably for several months or more without shutdown for cleaning.

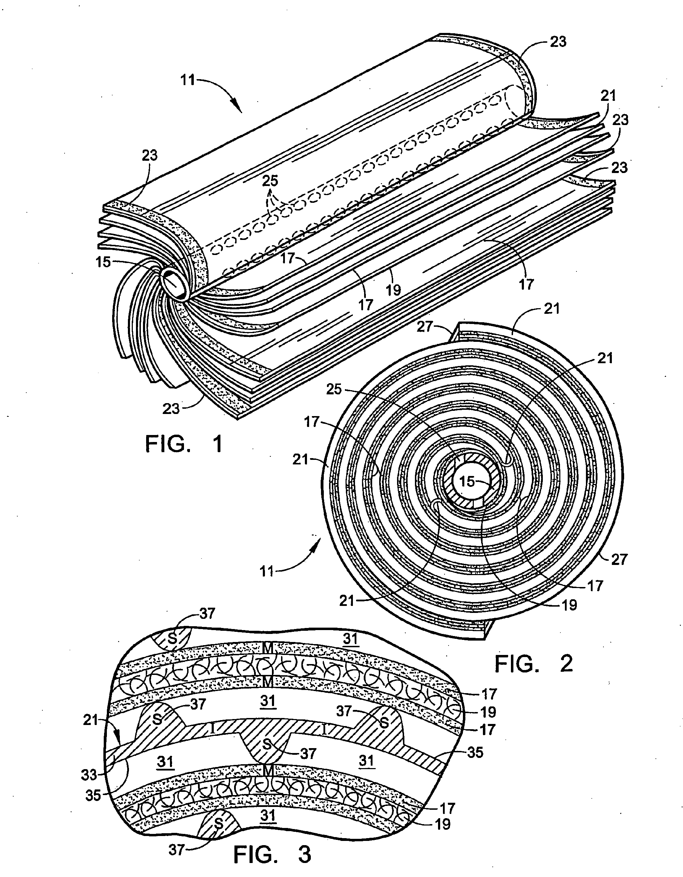

As depicted schematically in **Figures 1 and 2,** a spiral-wound type of high density filtration module 11 is traditionally fabricated by a multi-layer wrapping of leaves about a central tube 15 which is suitably porous to allow the permeate to flow through the tube sidewall into its interior. The central tube may extend out of one or both ends of the wrapping of the leaves, and the tube may first be wrapped about its entire length with a sheet of permeate carrier material as well known in this art. The leaves are often each provided by elongated sheets of semipermeable membrane 17 which are folded over a sheet 21 of feed spacer material, with the fold being disposed at the inner edge of the leaf adjacent the porous permeate tube 15. Sheets of permeate carrier material 19 are disposed between the facing leaves of the semipermeable membrane. Bands 23 of suitable adhesive material are used to seal the side edges of the permeate carrier sheet to the inactive surface of the semipermeable membrane, and likewise seal the end edge of the permeate carrier sheet as well known in this art. The adhesive permeates through the porous permeate carrier and into the porous inactive surface of the semipermeable membrane to establish a complete seal along three edges of the permeate carrier 19 sheet which prevents any ingress of the feed liquid being treated. As a result, the only liquid reaching the permeate carrier sheet is that which permeates through the active surface of the folded sheets of semipermeable membrane 17. The only liquid egress from the permeate carrier sheet is through the interior of the central tube 15, which the liquid enters, for example, by passing through a series of small holes 25 that are provided in parallel rows along the outer surface of the tube 15.

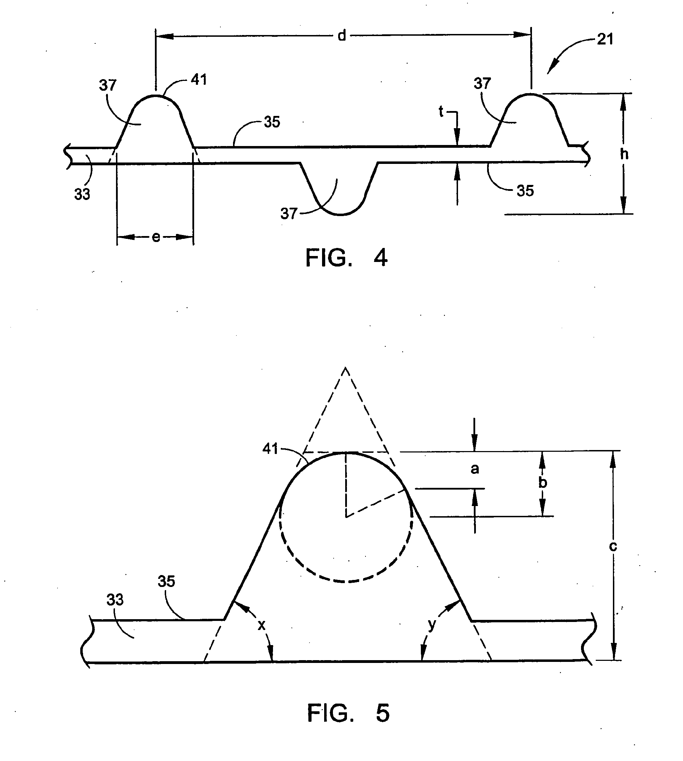

The details of the construction of a preferred embodiment of the feed spacer sheet 21 which creates multiple flow channels 31 are best seen in **Figures 3 and 4.** It has been found that high density modules incorporating the illustrated spacer material 21 provide the advantages of unobstructed, open-channel flow and high filter packing density as a result of compactly packaging what are essentially many concentric cylindrical layers of membrane and associated feed and permeate carrier sheets. Its specially designed supports maintain consistent dimensions for the open feed channels between facing concentric "tubular" layers. A fragmentary cross section of open flow channels 31 between two membrane leaves 17 of such a high-density module is shown in **Figure 3.** The membrane leaves are provided by envelopes of two sheets of membrane sheet material 17 that sandwich a porous permeate sheet 19 therebetween and are adhesively sealed along three edges of the sandwich. Liquid to be filtered is fed under pressure into the open feed channel and flows axially through the module, tangential to the filter or membrane surfaces. Filtrate passes through the membranes 17 on both surfaces of this envelope, entering the porous permeate carrier 19 and traveling spirally inward to the central tube 15 of the spiral-wound element or module 11.

The design of the spacer material 21 is such that it excellently supports the membrane sheets 17 to define the open channels 31 by maintaining the desired spatial positions of the facing filtration sheets. Specific characteristics of the spacer sheet 21 design can be seen with reference to a preferred configuration thereof which is shown in Figure 4 in enlarged view.

As best seen in **Figure 4,** the spacer sheet 21 includes a thin central layer 33 of flexible material (having the dimension "t") which can readily assume the curvature apparent from Figure 3 and which has parallel upper and lower surfaces 35. Sets of ribs 37, which are integral with the central layer 33, extend upward and downward from the upper and lower surfaces 35 and space the facing active surfaces of the semipermeable membrane apart from the central layer to create the open flow channels 31 seen in Figure 3. The overall height or thickness of the spacer sheet 21 is referred to by the dimension "h". The ribs 37 of each of the upper and lower sets are parallel to one another and extend axially of the module, preferably, but not necessarily, parallel to the axis of the cylindrical module 11. If desired, each of the sets could be offset at a slight angle to the axis in order to slightly lengthen the flow path which would have the effect of increasing liquid velocity if Q remained the same; however, they would still be referred to as extending generally axially as they would be channels which enter one end of the module and exit the opposite end of the module.

The construction and spacing of the ribs 37 is important to provide the desired performance in a high-density filtration module, i.e. a module wherein a relatively large amount of square feet of surface area of membrane material is provided within the confines of a cylinder of given outer diameter. In this respect, a primary object may be to construct modules that would include at least about 100 square feet of membrane surface area per cubic foot of volume of the cylinder defined by the outer surface of the module.

As is illustrated in **Figure 4,** the ribs 37 of each set are spaced equidistantly apart, and preferably the two sets of ribs are staggered, as can be seen in Figure 4, so that alternating ribs are each spaced substantially equidistant from the two closest ribs on the opposite surface 35 of the spacer sheet 21. In this manner, the relatively thin central layer 33 of flexible polymeric material will support the facing sheets of membrane 17 without itself arching particularly during fabrication of the module, and as a result reducing the cross-sectional area of the flow channels 31 being defined. The spacer sheet is preferably made from an appropriate thermoplastic resin material which will have the strength and flexibility needed, as well as the desired chemical and physical properties to operate over an extended period of time with the character of the liquid material that is being filtered; an extrusion process is likely used. As previously mentioned, one of the operations of particular interest for filtration modules of this general type is the reclamation of electrocoat painting operation wastewater, which permits the recycling of the water and optimally also the recovery of a large amount of the pigments for reuse. Although ultrafiltration membranes would normally be employed for such an operation, modules for other purposes may be made using microfiltration membranes as well as nanofiltration and reverse osmosis membranes.

There are a variety of polymeric materials that might be used to extrude such spacer sheets 21 that would be acceptable for use and which would have adequate flexibility and strength so as to resist against arching. Such materials include polyethylene, polypropylene, polycarbonate, polyvinylchloride, and copolymers thereof. Manufacture of all of these plastic materials has become quite sophisticated, and the physical properties of the materials can be varied, as by varying the density of the polymers and/or including additives in the material formulations. For adequate support, the polymeric material chosen should have strength and flexibility to effectively serve its intended purpose, and plastic material extrusion suppliers can easily meet such specification.

Not only is the relationship between the thickness of the central layer and the overall height of the integral ribs important, but the spacing and shape of the ribs 37 is important. In this respect, it is believed that there should preferably be between about 2 and 10 ribs per inch, more preferably between about 3 and 8 ribs per inch and most preferably between 4 to 6 ribs per inch; however, the peak-to-peak spacing "d" of the ribs 37 should also meet another criterion. The sets of ribs 37 should also be staggered between the upper surface and the lower surface, and the cross sectional shape of each of the ribs should be that of a triangle with a carefully rounded tip 41. The base of the triangle ("e" in **Figure 4)** is integral with the surface 35 of the central layer 33. Preferably the triangle is an isosceles triangle with the angles x and y, depicted in **Figure** 5, being equal and between about 45° and 80°, preferably between about 55° and 70°, and most preferably about 60° to 65°. The upper tip 41 is rounded with an arc that is tangential to its sides, as seen in **Figure 5.** The radius of the arc of curvature of the tip ("b" in **Figure 5)** is preferably about equal to twice the distance "a" (+ or - about 15%), with the distance "a" being the vertical distance from the tip 41 to the point of tangency as seen in **Figure 5.** Optionally, the tip end 41 of the rib could be very slightly flattened, while retaining its smooth transitional curvature and staying within the desired range of the ratio between "a" and "b".

The total or absolute height of the ribs, as measured from the opposite surface of the central layer, the dimension "c" in **Figure 5,** is a parameter that should be related to both the radius "b" and the rib spacing; moreover the thickness "t" of the central layer should be less than about 40% of the overall height "h" of the spacer sheet. The ratio of absolute height "c" to the radius of curvature "b" of the arcuate tip should be about 3.5 (+ or - about 15%). The ratio between the peak-to-peak spacing of the ribs 37, "d" in **Figure 4,** and the height "c" should be between about 2.5 and 10, and preferably between about 4 and 7. Moreover, when using a polymeric material of the character mentioned hereinbefore, it is also felt that the thickness "t" of the central layer 33 should also be less than about 40% of the width of the base of a rib 37 at the surface from which it extends, i.e. the dimension "e" in **Figure 4.** The central layer thickness "t" is preferably between about 5% and about 35% and more preferably between about 15% and about 25% of the base dimension "e" to provide the desired resistance to arching without unduly thickening the central layer, which would reduce the cross-sectional area of the flow channels 31. Moreover, the thickness "t" is preferably between about 5% and 35% of the overall height "h", and more preferably between about 10% and 20% thereof.

Overall, it is found modules having spacer sheets with a continuous, thin central layer, about 10 mil (0.010 in.) thick, and ribs which protrude to a height of about 30 mils (0.030 in.) and are within the aforementioned characteristics, allow a feed flow Reynolds number to be obtained comparable to that of a spiral-wound element having a channel height of only about 30 mil which uses a standard, woven or cross-fiber spacer material. This is considered valuable because such flow channels along opposite surfaces of this central layer with such Reynolds number will provide hydrodynamic characteristics having broad utility. However, spacer material of a total height "h" between about 30 to 100 mils may be desired for particular applications.

The ribs 37 are structurally stable and provide excellent support both during fabrication and during operation, e.g. when sudden losses of feed pressure may occur; yet they obstruct only a small portion of the flow channel (10-30%) and block only a small portion of the filter or membrane active area (1-10%). This results from using ribs of such generally triangular-shaped cross section which project from opposite surfaces of the central layer, and by optimally spacing the support ribs so they create only minimal liquid flow obstruction; at the same time, they complement the inherent stability of sheet membranes and thereby adequately prevent sagging of the filtration layers into the feed channels, their potential collapse during depressurizaton, and arching of the central layer during rolling or other comparable operations to fabricate such modules.

### Example 1: Comparison of High Density Modules Using Different Spacer Materials.

To demonstrate the capability of a test module incorporating one embodiment of spacer material made according to the present invention for operating at much higher fluid flow velocities than a standard, prior art, spiral-wound module, hydrodynamic tests with purified water were performed using a system equipped for making such measurements. Two high density tubular modules of the spiral wound type were prepared for use in the tests; both were 4 inches in diameter and 40 inches in length and contained the same ultrafiltration membrane manufactured by Sepro, which is commercially known as PVDF-400 and has a MTC of about 400 Lmh/bar. The improved feed channel spacer material in the test module had a thickness "h" of 70 mil (0.070 in), whereas the thickness of the commercial spacer net in the standard module was 30 mil. As explained above, despite this difference in thickness, the two spacers display essentially the same hydrodynamic characteristics, as measured in terms of Reynolds number, since the characteristic dimension is essentially the same.

In the spacer sheet 21 in the test module, sets of ribs 37 having a height of 30 mils protruded from opposite surfaces of a central layer "t" about 10 mils thick; the ribs 37 thus have an absolute height of about 40 mils. The angles x and y were about 65°, and the spacing of the ribs, peak-to-peak, was about 220 mils. The ratio of c/b was about 3.5; b was equal to about twice a; the ratio of d to c was 5.5; and the central layer thickness was about 20% of the base thickness "e" and about 17% of the overall height "h".

As a result of the differences in thickness of the spacer sheets, the total membrane area (A) in the test module was only about 75% of that in the standard module. The objective of the experiment was to determine the difference in feed flow rate between the two modules for similar values of feed pressure and pressure drop. The results obtained from testing over a period of about 10 minutes are tabulated below:

| **Module** | **Applied Pressure (psig)** | **Pressure Drop ΔP (psi)** | **Fluid Flow Rate Q (gal/min)** | **Filtrate Rate F (gal/min)** |
|---|---|---|---|---|
| Test | 43 | 22 | 105 | 5.1 |
| Standard | 50 | 30 | 31 | 5.5 |

The above data show that the pressure drop for the test module is only 73% of that for the standard module even at a feed flow rate for the test module which is over three times higher than that for the standard module. In addition, despite the substantially reduced amount of total membrane area and the lower overall average inlet pressure that was used, the filtrate rate for the test module is only 7% less than that for the standard module. From an economic standpoint, this small difference is more than offset by lower pressure requirements and the fact that the more than three times higher feed flow rate will very significantly reduce fouling and thus greatly extend the time periods between required cleanings when treating feedstocks high in suspended matter.

### Example 2: Comparative Examples for High-VOC Electrocoat Paint Wastewaters.

To demonstrate the capability of a standard module, one similar to that used in Example 1 is first used to treat high-VOC electrocoat paint wastewaters for comparative testing. This spiral wound module is 8 inches in diameter and 40 inches in length and contains the same PVDF-400 ultrafiltration (UF) membrane. The thickness of the commercial spacer net in this standard module is again about 30 mils. The total membrane area (A) in the standard 8 in. diameter module is about 275 sq. feet.

Non-agglomerating, high-VOC paint wastewater from an electrocoat operation is fed to the module at an inlet pressure of 50 psig and a flow rate (Q) of 70 gal/min. A filtrate rate (F) of 2.5 gal/min is obtained at a pressure drop of 30 psi, as set by a downstream control valve. The value of F for this standard module corresponds to a permeate flux of 22 Lmh.

For comparison purposes, another system is provided which employs commercial tubular UF membranes in the form of modules that are 10 feet in length and have 1.5 diameter jackets within which ½ in. diameter UF tubes are contained, 7 tubes in each. Thirty-six of these tubular modules are used to treat the same non-agglomerating wastewater feed; they are manifolded and collectively contain essentially the same amount of active membrane area, i.e. about 275 sq. ft., as the standard spiral wound module above. The tubular modules are arranged in groups of six modules in series and manifolded to operate six such groups in parallel; the feed is pumped interior of the tubular filters. For an inlet pressure of 70 psig and a high flowrate of 210 gal/min, a filtrate rate of about 2.5 gal/min is obtained at a pressure drop of 50 psi, as set by a downstream control valve. Because the values of F and A are the same as the standard module, the permeate flux is similarly equal to about 22 Lmh.

In comparison, to obtain about the same filtrate rate as that of the single spiral wound module, the tubular system is employing an inlet pressure that is 20 psi higher, a feed flow rate that is three times greater, and a pressure drop that is 20 psi greater. These all result in higher operating costs for the tubular system. In addition, the capital cost of the tubular modules is about seven times higher than that for the spiral wound module. This demonstrates inherent advantages of high density filtration modules, as exemplified by spiral wound modules, for filtering liquids that are not prone to excessive feed channel plugging or fouling so as to incur excessive pressure drop in the feed channels.

### Example 3: Treatment of Agglomeration-Prone, Low-VOC Electrocoat Paint Wastewaters.

A. A spiral wound module essentially similar to that of Example 2 is employed to treat an agglomeration-prone, low-VOC paint wastewater from an electrocoat operation at an inlet pressure of about 50 psig; the wastewater has a suspended solids concentration of about 100 g/L and a viscosity of about 30 cps. From the onset, its performance is unstable and then declines, due to agglomeration of paint solids on the surface of the membrane and in cross members of the feed channel spacer net; this results in a rapid reduction of filtrate rate and an increase in pressure drop. Within two days of operation, the filtrate rate is reduced to less than 1 gal/min, and the pressure drop increases to greater than 40 psi.
B. The tubular system of Example 2 is used to treat the same wastewater as above at an inlet pressure of about 70 psig. Its performance is essentially the same as in Example 2. It continues to produce a filtrate rate of about 2.5 gal/min at a pressure drop of about 50 psi.
C. For comparison, the 70-mil open-channel spacer tested in Example 1 is incorporated into an 8-inch diameter spiral wound module that is 40 inches long, which is used to treat the same wastewater as just above and is referred to as a "C" module. The active membrane area in this module is about 210 ft², somewhat less than the about 275 ft² of the A module above due to the increased thickness of the spacer material. This C module is operated at the same high flow rate of 210 gal/min, which is used for the B tubular system; such a flow rate is not practically possible for the standard A module with this feed liquid as shown above. In contrast to the performance of module A, the performance of this C module is remarkably stable. For an inlet pressure of 50 psig, a filtration rate of 2.0 gal/min is obtained at a pressure drop of 30 psi. This rate corresponds to a permeate flux of about 23 Lmh, which is higher than the comparable value of 22 Lmh for the tubular system; this is a consequence of the difference in membrane areas between these two modules.

To increase the total filtrate rate, two of the same C modules in series are used under the same operating conditions as are used for the tubular system above, i.e. the same flow rate of 210 gal/min and a total pressure drop of 50 psi. The filtrate rate is 4 gal/min (as a consequence of its 420 sq. ft. of membrane). In addition to such a 60% higher filtrate rate than the rate from the B tubular system (i.e. 25 gal/mm), the capital cost for two such C modules is less than one-third that of the thirty-six 1.5 in. diameter tubular modules.

By employing such feed spacer sheet material in high-density membrane modules, difficult-to-treat feeds, such as those having viscosities of about 15 cps or above, e.g. about 30 cps or above (room temp.) or suspended solids content of about 5 g/L or greater, e.g. about 100 g/L or above, can be effectively processed to obtain a permeate flux of at least about 17 Lmh (and often higher than 23 Lmh) at an inlet pressure of 100 psig or less and preferably not greater than about 50 psig. Moreover, operation under such conditions can be maintained for at least about several weeks, and usually for about several months or more without the need to suspend operation for cleaning.

Although the invention has been described with regard to certain preferred embodiments which incorporate the best mode known to the inventor at the present time, it should be understood that various changes and modifications as would be obvious to one having ordinary skill in this art may be made without departing from the scope of the invention which is set forth in the claims appended hereto. For example, although the valuable use of these modules incorporating this improved spacer sheet material for reclaiming wastewater from an electrocoat operation has been described and discussed, it should be understood that there are additional fields of treatment of wastewater and other streams high in viscosity and/or suspended solids that can likewise benefit from the employment of these high density, high flow, low fouling modules.

## Claims

1. A cylindrical high-density filtration module (11) for separating a liquid from a feed of high viscosity or containing high suspended solids, which module comprises
porous sheetlike filtration membrane (17) having pores sized to allow passage of the liquid in a transverse direction while rejecting passage therethrough of solids, sheets of said membrane being disposed generally concentrically about a central axis,
a sheet of feed liquid spacer material (21) having two sets of generally parallel ribs (37) of similar size regularly spaced apart from one another, said sets of ribs projecting from opposite surfaces of a thin central layer (33) and forming feed-carrying channels (31) extending in a generally axial direction with respect to the cylindrical module, said sets of ribs being arranged so that each rib (37) is located substantially equidistant from the two adjacent ribs in the opposite set, said central layer having a thickness "t" of 40% or less than the thickness "e" of said ribs at their bases where said ribs join said central layer, said feed carrier spacer sheet (21) being disposed adjacent an entry surface of said filtration membrane; and
a permeate carrier layer (19) disposed adjacent a discharge surface of each said membrane sheet (17).

2. The module of claim 1 wherein said spacer material (21) comprises between 2 and 10 ribs per inch extending from each said surface and wherein said permeate carrier (19) extends inward to a porous tube (15) located at said central axis which is adapted to conduct discharge flow of the liquid from the module.

3. The module of either claim 1 or 2 wherein at least two sheets of said membrane (17) are arranged to flank a sheet of feed channel spacer material (21) and are disposed about a porous tube (15) located at the axis of the cylindrical module.

4. The module of claim 3 wherein said membrane (17) is folded at an inner edge adjacent said central tube to create a sandwich of said feed liquid spacer (21) between two sections of each sheet of membrane and wherein said membrane is a microfiltration or an ultrafiltration membrane.

5. The module of any one of claims 1 to 4 wherein the ratio of the distance "d" between peaks of adjacent ribs (37) and the absolute height "c" of said ribs is from 4 to 10.

6. The module of any one of claims 1 to 5 wherein said ribs (37) have the cross section of an isosceles triangle with a smoothly rounded peak having a radius of curvature "b" that is about twice the height "a" of the arcuate rib peak surface which it defines.

7. The module of claim 6 wherein said ribs (37) have an absolute height "c" that is about 3.5 times the radius of curvature at their peaks.

8. The module of any one of claims 1 to 7 wherein the thickness "t" of said central layer (33) is 15% to 25% of said thickness "e" of said ribs (37) at their bases.

9. The module of any one of claims 1 to 8 wherein the thickness "t" of said central layer (33) is 10% to 20% of the height "h" of said sheet of spacer materials (21).

10. A method for economically recovering pigment from electrocoat painting wastewater feed, which method comprises the steps of:
(a) feeding said wastewater axially through a high-density membrane module (11), which module comprises:
a plurality of sheets of porous membrane (17) having pores sized to allow passage of liquid in a transverse direction while rejecting passage therethrough of solid pigments and the like in said feed, said sheets of membranes being arranged in essentially coaxial cylinders about a central axis,
flexible feed spacer sheet material (21) disposed adjacent the active entry surface of each said membrane sheet (17), said spacer material comprising a thin central layer (33) and two sets of individual ribs (37), each set projecting from an opposite surface of said central layer and each including a plurality of parallel ribs of similar size regularly spaced apart from one another with tips of said ribs contacting said membrane sheets so as to maintain spacing therebetween to form uniform feed-carrying channels (31), the regions between said parallel ribs being completely open and oriented so that said channels extend in a generally axial direction of flow,
said ribs (37) providing between 2 and 10 channels per inch and being generally triangular in cross-section with said tips being smoothly rounded,
said central layer (33) having a thickness "t" of 40% or less than the thickness "e" of said ribs at their bases, and
a permeate carrier layer (19) disposed adjacent a discharge surface of each said membrane sheet, said permeate carrier conducting the discharge flow of water from said module, and
(b) withdrawing liquid from said module for extended periods of time at a permeate flux of at least 10 Lmh and at an inlet pressure of 100 psig or less, when being used to reclaim pigment from electrocoat painting wastewater.
